# EUROPEAN PATENT SPECIFICATION

(11) **EP 3 247 687 B1**
(45) Date of publication and mention of the grant of the patent: **11.03.2020**
(21) Application number: 16700718.6
(22) Date of filing: 14.01.2016
(51) Int. Cl.: C04B 28/26, C04B 40/06, C09D 5/02, C09D 7/47, C04B 111/60

(54) **USE OF LEVELLING COMPOUND**
VERWENDUNG EINER NIVELLIERMASSE
UTILISATION D'UNE COMPOSITION DE NIVELLEMENT

(30) Priority: 15.01.2015 DE 102015000200
(43) Date of publication of application: 29.11.2017
(73) Proprietor: Saint-Gobain Weber GmbH, 40549 Düsseldorf (DE)
(72) Inventor: FÜHRICH, Uwe, 79238 Ehrenkirchen (DE)
(74) Representative: Saint-Gobain Recherche
(86) International application number: PCT/EP2016/050700
(87) International publication number: WO 2016/113366

(56) References cited:
- EP-A1- 0 441 297
- DE-A1-102005 040 091
- RU-C1- 2 318 782
- US-A- 5 186 746
- US-A1- 2009 107 059
- US-B2- 7 429 392
- ADRIAN THOMAS: "Waterborne Silicates in Coatings and Construction Chemicals", 48TH ANNUAL SURFACE COATINGS ASSOCIATION AUSTRALIA (SCAA) CONFERENCE 2008, 7 August 2008 (2008-08-07), pages 1-37, XP055267408, North Wollongog, Australia

## Description

The invention relates to the use of a ready to use, pasty or preferably liquid levelling (or smoothing) compound (mixture or putty or spackle or sealant) that allows to or is constructed/set up to coat a subfloor as basis for a floor covering on its upper surface, to coat and/or level (or render smooth) a subfloor.

Levelling materials to be coated e.g. on subfloors need to fulfill certain requirements in distinction from coatings of walls and ceilings. Among them especially the requirement of compression resistance as well as flexural strength and pressure resistance are to be mentioned, allowing to resist the stresses caused by heavy objects such as furniture or people walking on the floor and the like. Also the formation of cracks due to shrinkage during hardening is to be avoided. According to the standard EN 13813 established for screeds, bond strength classes are defined for different screed materials. The bond strength expressed in N/mm² is determined according to the standard EN 13892-8. The German association for screeds and flooring (BEB - Bundersverband Estrich und Belag e.V.) recommends that the bond strength for screeds are greater or equal to 0.5 N/mm², the specific given values depending on the kind of covering elements (tiles, textiles...).

EP 0 441 297 A1 discloses a resin-bonded coating material which is used for application to building walls and/or floors, especially a resin render, resin paint or resin plaster. To increase the vapour diffusion, capillary- or pore-forming additives in the form of fibres, hollow fibres, spheres, hollow spheres, platelets, crystals or granules, which essentially are not soluble until the material has solidified, are added to the material.

Up to now, hydraulically hardening mineral mortars or putties were used to fulfill these requirements which also could be managed to (chemically) harden within an appropriate period of time, e.g. some hours to 24 hours.

Polymer dispersion based coating compounds (mixtures), due to the requirement of water evaporation allowing for the (physical) hardening, were considered not appropriate for levelling compounds that exceed a thickness of about 1 mm and therefore were not used for floor levelling but only as coating compositions.

It has now surprisingly been found that a one component compound comprising a combination of an aqueous polymer dispersion, a water glass (solution of alkali silicate(s) in water), a filler (e.g. an aluminosilicate) with gaseous inclusions (and thus pores and/or capillaries) and a spreading composition and optionally other additives allows for application (coating) in a thickness of up to 10 mm, e.g. up to 9, 8, 7, 6 or especially 5 mm, nevertheless to achieve hardening within an appropriate time, e.g. 24 hours or less, and to achieve the required physical robustness also appropriate for use in floor levelling.

The invention therefore relates to the use of pasty or liquid levelling compound as claimed in Claim 1.

In the following, more general terms or features are defined in a preferred and more specific way, allowing to replace one or more or all general terms by the more specific ones, where each such replacement leads to more specific and more preferred invention embodiments.

Where "a" or "an" is used, this includes "one or more".

Where percentages are given (in W-%, meaning weight percent), except if not mentioned or derivable otherwise, they refer to the weight of all constituents taken together.

Where (meth) acrylic acid and the like is mentioned, this refers to acrylic, methacrylic or acrylic and methacrylic acid or the respective derivative mentioned, respectively.

A "ready to use, pasty or liquid (especially floor) levelling (or smoothing) compound" (also nameable mixture or putty or sealant or composition) especially is an aqueous dispersion of the named ingredients and has a viscosity and especially a spreading characteristic (flow characteristic) appropriate for the intended and mentioned use, especially when using a metal cylinder with a diameter of 6.8 cm and a length of 3.5 cm, placing it vertically on a glass plate, filling it with a compound according to the invention and lifting the cylinder a spread over a surface with a diameter of 15 to 50, preferably 20 to 30 cm.

An "aqueous polymer dispersion" is preferably a customary dispersion used for modification of cement and mortar mixtures (e.g. in JP 2010019011 or JP 2010019012) based on an aqueous dispersion of a polymer selected from the group consisting of homopolymers such as vinyl esters, polyesters, poly epoxides or polyamides, or copolymers; e.g. polymers or copolymers comprising one or two or more monomer units obtained from monomers selected from the group consisting of e.g. vinyl acetate, vinyl propionate, vinyl butyrate, vinyl-2-ethyl hexanoate, vinyl laureate, 1-methylvinyl acetate, vinyl pivalate or vinyl esters of alpha-branched monocarbonic acids with 9 to 11 carbon atoms; (meth)acrylic acid esters or amides, such as methylacrylate, methylmethacrylate, ethylacrylate, ethylmethacrylate, propylacrylate, propylmethacrylate, hydroxyethylacrylate, hydroxyethylmethacrylate, hydroxypropylacrylate, hydroxypropylmethacrylate, n-butylacrylate, n-butylmethacrylate, t-butylacrylate, t-butylmethacrylate or 2-ethylhexylacrylate; vinyl aromates, e.g. styrene, methylstyrene or vinyltoluene; olefins, such as ethylene, propylene, 1,3-butadiene and isoprene; 1,3-dienes; and vinylhalogenides, e.g. vinylchloride further (co)polymerizable monomers, such as fumaric acid, maleic acid or its diethyl or diisopropylester or its anhydride, ethylenically unsaturated sulfonic acids or their salts, such as vinyl sulfonic acid, 2-acrylamido-2-methyl-propane sulfonic acid, diallylphthalate, divinyl adipate, diallyl maleate, allylmethacrylate or triallylcyanurate, or crosslinking comonomers, such as acrylamidoglycolic acid, methylacrylamidoglycolic acid methyl ester, N-methylolacrylamide, N-methylomethacrylamide, N-methylisolallylcarbamate, alkyl ethers such as the isobutoxyether or ester of N-methylolacrylamide or -methacylamide, epoxy-functionalized such as glycidyl methacrylate or -acrylate, silicium functional comonomers, such as acryloxypropyltri(alkoxy)- or-methacryloxypropyltri(alkoxy) silanes, wherein alkoxy is e.g. methoxy, ethoxy or ethoxyethylen- or-propylenglycolethers, diaceton acrylamide and acetylacetoxyethylacrylate or -methacrylate.

Of special interest are for example (meth)acrylic copolymers (products of copolymerization of (meth)acrylic esters, e.g. C₁-C₇alkyl-, e.g. methyl or ethyl, acrylate or C₁-C₇alkyl-, e.g methyl or ethyl, methacrylate, or of acrylamides or methacrylamides, e.g. N-methoxyacrylamide or N-methoxy-methacrylamide, and other unsaturated monomers, e.g. styrene (preferred), acrylonitrile.

Especially preferred are mixed polymerisates such as co-polymerisates of two or more, e.g. 3 or 4, monomers selected from the group consisting of styrene, (meth)acrylic acid, C₁-C₇alkyl-(meth)acrylate, such as methyl or ethyl (meth)acrylate (preferred) and (meth)acrylamide. A preferred polymer dispersion is Mowilith VDM 618®.

The polymer dispersion of the liquid component is, in a complete floor levelling compound used according to the invention, present in an amount of 0.1 to 30 percent by weight (W-%), e.g. from 0.5 to 25 W-%, in a preferred variant from 1 to 20 W-%, calculated as dry polymer (the water content in the polymer dispersion as such (only polymer and water) may e.g. be in the range from 10 to 90, preferably from 30 to 60 W-%).

A water glass (solution of alkali silicate(s) in water) is preferably a potassium, sodium or especially a lithium silicate in water, or a mixture of two or more of such alkali silicates, preferably including lithium silicate. A preferred example is Betolin Li 20®. The water glass is present in an amount of from 1 to 40 W-%, e.g. from 2 to 20 W-%, preferably from 3 to 10 W-%.

"A filler (e.g. an aluminosilicate) with gaseous inclusions (and thus especially with pores and/or capillaries, e.g. causing a high surface area) refers to a material such as an aluminosilicate, such as a corresponding aluminosilicate with a specific surface area (BET, measured according to DIN 66132) of 1 to 10, e.g. 3 to 5 (for example about 4) m²/g and preferably an oil absorption of less than 80, especially less than 70 g/100 g (measured according to DIN ISO 787, T5). This material is present in a compound used according to the invention in an amount ranging from 0.5 to 10 W-%, e.g. from 1 to 10 W-%, preferably from 2 to 10 W-%.

While it is not intended to be bound by that hypothetic explanation, it can be assumed that the capillary and porous status of this filler with gaseous inclusions allows for an accelerated drying, due to capillary forces and/or higher specific surface.

As a "spreading composition", an aqueous suspension of a polymer based on polycarboxyl ethers is included, such as Melflux 0417 L® or Melflux 2500 L®, or a mixture of two or more such polymers. The spreading composition is present in an amount ranging from 0.01 to 5 W-%, e.g. from 0.05 to 2 W-%, preferably from 0.1 to 1 W-%.

In addition to the four mentioned ingredients or ingredient classes, further additives may be present.

Apart from the ingredients/constituents mentioned so far and preferably, one or more further constituents (additives) may be present, such as water (e.g. in an amount from 1 to 50 W-%, such as 2 to 30 W-%, e.g. 4 to 20 W-%); defoamers (e.g. on silicone basis or without silicone, for example a defoamer based on an aqueous emulsion of a polysiloxane copolymer with hydrophobic silica, such as Agitan 150®, e.g. in an amount of 0.05 to 5 W-%, such as 0.1 to 1 W-%, preferably 0.2 to 0.5 W-%); thickeners, e.g. on the basis of modified cellulose, bentonite, amorphous/disperse silica, polyurethane or acrylate or mixtures of two or more thereof, such as Tylose H 20 P2® (a hydroxyethylcellulose) or methylcellulose, e.g. in an amount from 0.005 to 1 W-%, such as 0.008 to 0.5 W-%, preferably from 0.01 to 0.05 W-%; a (micro)biocide, for example MIT, BIT, CMIT or a mixture of two or more thereof, e.g. Acticide MBS 5050®, e.g. in an amount from 0.001 to 2 W-%, such as 0.005 to 1 W-%, preferably 0.01 to 0.2 W-%, a dispersion stabilizer (in order to inhibit or delay sedimentation, e.g. based on Carrageenan, Cellulose gum, diutan gum, gellan gum, whey protein concentrate, pectin, locust bean gum, xanthan gum or γ-polyglutamate or other dispersion stabilizer, or mixtures of two or more thereof, for example from Kelco such as Kelco Crete DG-F1, e.g. in an amount from 0.0005 to 5 W-%, such as 0.001 to 2 W-%, preferably from 0.005 to 0.8 W-%); a dispersant, e.g. an anionic, cationic and/or non-ionic detergent, especially salt modified phosphonic acid, e.g. Sapetin D20®, in an amount from 0.01 to 5 W-%, e.g. from 0.05 to 3 W-%, preferably from 0,1 to 0.5 W-%), or two or more or all thereof; optionally further including (e.g. polyethylene) fibers, accelerators, retardants, wetting agents, solvents other than water, coloring agents (e.g. dyes or pigments), plasticizers, light- or UV stabilizers or mixtures of two or more thereof. Such additives may be, related to weight of the complete components of the adhesive system according to the invention before use, be present in total amount of from 0.01 to 20 percent by weight, e.g. from 0.05 to 10 percent by weight.

Also filler can preferably be added and thus present in the final compound, such as sand, carbon black, quartz sand, limestone, stone or mineral flours, glass, corundum or the like, or mixtures of two or more thereof. The filler may be provided in an amount of 2 to 70 W-%, e.g. 10 to 70 W-%, preferably 30 to 70 W-%, for example 30 to 60 W-% and is preferably added in the form of a powder or (e.g. in the case of sand) particles.

Preferably the use in all embodiments of the invention relates to floor levelling, having bond strength greater or equal to 0.8 N/mm², preferably greater or equal than 1.0 N/mm², measured according to EN 13892-8, after 3 days of drying in a climate chamber maintained at 20°C with 65% of relative humidity.

"Subfloor" especially relates to any underground for a floor, especially inside buildings, such as houses, theatres, stores, malls or public buildings.

The compound used as finishing coating for floors, may also comprise coloring and/or shine contributing additives, e.g. pigments or dyes or silicones or the like, e.g. in an amount from 0.001 to 5, such as 0.005 to 3 W-%.

"Upper surface" of a floor relates to a floor cover that forms the upper surface of a floor, such as a carpet, a fitted (e.g. wall-to-wall) carpet, a laminate, a parquet, a hardwood flooring, a synthetic floor covering or any other at least potentially (= if not covered with a further material, e.g. a carpet) visible (upper) floor covering.

"Levelling" or "(to) level") especially refers to the smoothing of roughness, wrinkles, unevenness, projecting areas, pits and recesses or other comparable surface defects.

The "applying" to a subfloor can be made with any customary tool, e.g. a spattle, a putty knife, a scraper, via tubes, or by other manual or automatic spreading devices.

A container is preferably a closed or closeable container, e.g. a can or canister or other lidded container, allowing to remove inhomogeneity caused by sedimentation e.g. during stocking and then, after opening, applying to the subfloor. This allows for an especially advantageous and simple handling of the floor levelling compounds used according to the invention which can thus be stored and used as one component systems.

The mixing of the ingredients of a floor levelling compound used according to the invention can be achieved by any conventional mixing process, including where required homogenisators, stirrers, lowered pressure, heaters, coolers, a temperature range e.g. in the area from about 0 to about 50 °C, e.g. from 5 to 35 °C, making into a paste by (preferably cautious, e.g. stepwise) addition of water or the aqueous polymer dispersion and/or the water glass and/or the aqueous spreading composition or any other aqueous ingredient, or two or more of these aqueous ingredients, to one or more of the other dry ingredients, and other known mixing and packaging steps.

It is merely essential to avoid the drying during the manufacturing process in order to avoid unintended hardening before the dispersion is applied to a subfloor.

The invention also relates to the embodiments in the claims and the abstract and especially the dependent claims, all of which are therefore incorporated into the description as support thereof.

The following example serves to illustrate the invention without limiting its scope.

### Example 1: Floor Levelling Compound

A floor levelling compound was mixed with the following ingredients (in weight percent = W-%):

**Table 1**

| Ingredient No. | Ingredient | W-% |
|---|---|---|
| 1 | Water | 10.700 |
| 2 | Tylose H 20 P2 | 0.013 |
| 3 | Mix of lime meal (KSM) with Kelco-Crete DG-F1 | 0.250 |
| 4 | Mowilith VDM 618 | 10.000 |
| 5 | Betolin Li 20 | 6.500 |
| 6 | Sapetin D20 | 0.300 |
| 7 | Acticide MBS 5050 | 0.075 |
| 8 | Sand 0-0.3T | 30.000 |
| 9 | KSM 60/3 Fels | 24.062 |
| 10 | Kraft 9040 | 12, 000 |
| 11 | aluminosilicate with a specific surface area (BET, DIN 66132) of about 4 m²/g and an oil absorption of less than 70 g/100 g (DIN ISO 787, T5) | 5.450 |
| 12 | Melflux 0417/45 % | 0.300 |
| 13 | Melflux 2500L 45 % / | 0.050 |
| 14 | Agitan 150 | 0.300 |
| Σ | | 100 |

Tylose H 20 P2 is a trademark product sold by ShinEtsu SE Tylose GmbH & Co KG, Wiesbaden, Germany
Kelco-Crete DG-F1 is a trademark product sold by CP Kelco Germany GmbH, Grossenbrode, Germany
Mowilith VDM 618 is a trademark product sold by Celanese Emulsions GmbH, Frankfurt/M., Germany
Betolin Li 20 is a trademark product sold by Wöllner GmbH & Co KG, Ludwigshafen, Germany
Sapetin D20 is a trademark product sold by Wöllner GmbH & Co KG, Ludwigshafen, Germany
Acticide MBS 5050 is a trademark product sold by Thor GmbH, Speyer, Germany.
KSM 60/3 Fels (Werk Rübeland) is a limestone powder product sold by Holcim Deutschland AG, Hamburg, Germany
Kraft 9040LM is a limestone powder product sold by Karl Kraft Steinwerke OHG, Heidenheim, Germany
Melflux 0417 L and Melflux 2500 L are trademark products sold by BASF Construction Solutions GmbH, Trostberg, Germany Agitan 150 is a trademark product sold by Münzing Chemie GmbH, Heilbronn, Germany.

The resulting mixture can be spread on a subfloor with a thickness up to 5 mm. No cracks are formed during drying. When spread in the flow table test, the flow is 25 cm (that is, the material spreads to a surface having a diameter of 25 cm on glass as described above). The bond strength measured according to EN 13892-8 is 1.4 N/mm² after 3 days of drying out at a temperature of 20°C with 65% of relative humidity.

Some drying tests of the resulting mixture have been made with two different thicknesses, respectively 3mm and 5mm. The tests were made in a chamber having 65% relative humidity, and a temperature of 20°C. The weight losses of the samples corresponding to the drying process advancement are measured every 24 hours for a period of 9 days and then after 29 days. For both thicknesses, it appears that more of 95% of the drying out appears within the first 24 hours.

### Comparative example:

A floor levelling compound was mixed with the different constituents given in table 1 in the same quantity, but without ingredient No.11 (aluminosilicate with specific surface area of about 4 m²/g and an oil absorption of less than 70 g/100g) and with 29,512 W-% of ingredient 9 (limestone powder KSM 60/3 Fels). All the other ingredients are introduced in the same quantities than those expressed in table 1.

The floor levelling compound is put into a plate, in a thickness of 5 mm and the drying out is performed in a climate chamber maintained at 20°C with 65% of relative humidity. The weight loss of the sample during the drying out is measured after 1 and 2 days.

**Table 2**

| Time (days) | Weight of the sample | Weight loss % |
|---|---|---|
| 0 | 399.06 | 0 |
| 1 | 329.14 | 17.52 |
| 2 | 324.68 | 18.63 |

The same drying test is made simultaneously in the same conditions with the formulation according to the present invention, comprising aluminosilicate (as detailed in table 1).

**Table 3**

| Time (days) | Weight of the sample | Weight loss % |
|---|---|---|
| 0 | 399.17 | 0 |
| 1 | 323.30 | 19.01 |
| 2 | 315.20 | 21.04 |

The comparison of the results of the drying tests made with the two different samples clearly show that the formulation according to the present invention allow to shorten efficiently the drying out time.

### Comparative example:

A floor levelling compound was mixed with the different constituents given in table 1 in the same quantity, but without ingredient No.11 (aluminosilicate with specific surface area of about 4 m²/g and an oil absorption of less than 70 g/100g) and with 29,512 W-% of ingredient 9 (limestone powder KSM 60/3 Fels). All the other ingredients are introduced in the same quantities than those expressed in table 1.

The floor levelling compound is put into a plate, in a thickness of 5 mm and the drying out is performed in a climate chamber maintained at 20°C with 65% of relative humidity. The weight loss of the sample during the drying out is measured after 1 and 2 days.

**Table 2**

| Time (days) | Weight of the sample | Weight loss % |
|---|---|---|
| 0 | 399.06 | 0 |
| 1 | 329.14 | 17.52 |
| 2 | 324.68 | 18.63 |

The same drying test is made simultaneously in the same conditions with the formulation according to the present invention, comprising aluminosilicate (as detailed in table 1).

**Table 3**

| Time (days) | Weight of the sample | Weight loss % |
|---|---|---|
| 0 | 399.17 | 0 |
| 1 | 323.30 | 19.01 |
| 2 | 315.20 | 21.04 |

The comparison of the results of the drying tests made with the two different samples clearly show that the formulation according to the present invention allow to shorten efficiently the drying out time.

## Claims

1. A use of a ready to use, pasty or liquid levelling compound that allows to or is constructed/set up to coat a subfloor as basis for a floor covering on its upper surface, said floor levelling compound comprising a combination of an aqueous polymer dispersion, a water glass, a filler with gaseous inclusions, a spreading composition and optionally other additives, wherein the aqueous polymer dispersion is present in an amount of 0.1 to 30 percent by weight (W-%), calculated as dry polymer; the water glass is present in an amount of from 1 to 40 W-%; the filler with gaseous inclusions is present in an amount ranging from 0.5 to 10 W-%; and the spreading composition is present in an amount ranging from 0.01 to 5 W-%, as a levelling coating on a subfloor or as a finishing coating for floors.

2. The use according to claim 1, wherein the aqueous polymer dispersion is an aqueous dispersion of at least one polymer selected from homopolymers, especially vinyl esters, polyesters, poly epoxides or polyamides, and copolymers obtained from two or more monomers selected from the group consisting of e.g. vinyl acetate, vinyl propionate, vinyl butyrate, vinyl-2-ethyl hexanoate, vinyl laureate, 1-methylvinyl acetate, vinyl pivalate or vinyl esters of alpha-branched monocarbonic acids with 9 to 11 carbon atoms; (meth)acrylic acid esters or amides, such as methylacrylate, methylmethacrylate, ethylacrylate, ethylmethacrylate, propylacrylate, propylmethacrylate, hydroxyethylacrylate, hydroxyethylmethacrylate, hydroxypropylacrylate, hydroxypropylmethacrylate, n-butylacrylate, n-butylmethacrylate, t-butylacrylate, t-butylmethacrylate or 2-ethylhexylacrylate; vinyl aromates, e.g. styrene, methylstyrene or vinyltoluene; olefins, such as ethylene, propylene, 1,3-butadiene and isoprene; 1,3-dienes; and vinylhalogenides, e.g. vinylchloride further (co)polymerizable monomers, such as fumaric acid, maleic acid or its diethyl or diisopropylester or its anhydride, ethylenically unsaturated sulfonic acids or their salts, such as vinyl sulfonic acid, 2-acrylamido-2-methyl-propane sulfonic acid, diallylphthalate, divinyl adipate, diallyl maleate, allylmethacrylate or triallylcyanurate, or crosslinking comonomers, such as acrylamidoglycolic acid, methylacrylamidoglycolic acid methyl ester, N-methylolacrylamide, N-methylomethacrylamide, N-methylsolallylcarbamate, alkyl ethers such as the isobutoxyether or ester of N-methylolacrylamide or - methacylamide, epoxy-functionalized such as glycidyl methacrylate or -acrylate, silicium functional comonomers, such as acryloxypropyltri(alkoxy)- or-methacryloxypropyltri(alkoxy) silanes, wherein alkoxy is e.g. methoxy, ethoxy or ethoxyethylen- or-propylenglycolethers, diaceton acrylamide and acetylacetoxyethylacrylate or -methacrylate; especially a co-polymerisate of two or more monomers selected from the group consisting of styrene, (meth)acrylic acid, C₁-C₇alkyl-(meth)acrylate, such as methyl or ethyl (meth)acrylate (preferred) and (meth)acrylamide.

3. The use according to claim 1 or claim 2 wherein the water glass is an aqueous lithium silicate or a mixture of alkali silicates including lithium silicate.

4. The use according to any one of claims 1 to 3 wherein the filler with gaseous inclusions and thus pores and/or capillaries is an aluminosilicate.

5. The use according to any one of claims 1 to 4 wherein the spreading composition is an aqueous suspension of a polymer based on polycarboxyl ethers, or a mixture or two or more such polymers.

6. The use according to any one of claims 1 to 5, wherein the aqueous polymer dispersion is present in an amount of from 0.5 to 25 W-%, in a preferred variant from 1 to 20 W-%, calculated as dry polymer; the water glass is present in an amount of from 2 to 20 W-%, preferably from 3 to 10 W-%; the filler with gaseous inclusions is present in an amount ranging from 1 to 10 W-%, preferably from 2 to 10 W-%; and the spreading composition is present in an amount ranging from 0.05 to 2 W-%, preferably from 0.1 to 1 W-%.

7. The use according claim 6, wherein the optional other additives are selected from water, a defoamer, a thickener, a biocide, a dispersion stabilizer, a dispersant, or two or more or especially all thereof; wherein preferably the water is present in an amount from 1 to 50 W-%; the defoamer is present in an amount falling in the range from 0.05 to 5 W-%; the thickener is present in an amount falling in the range from 0.005 to 1 W-%, the biocide is present in an amount falling in the range from 0.01 to 2 W-%, the dispersion stabilizer is present in an amount falling in the range from 0.05 to 5 W-%, and the dispersant is present in an amount falling in the range from 0.01 to 5 W-%; and optionally one or more further ingredients selected from fibers, accelerators, retardants, wetting agents, solvents other than water, coloring agents, plasticizers, light- or UV-stabilizers or mixtures of two or more thereof, which may be present in a total amount from 0.01 to 20 W-%.

8. The use according to any one of claims 1 to 7, comprising as defoamer a defoamer based on an aqueous emulsion of a polysiloxane copolymer with hydrophobic silica; as thickener a modified cellulose; as biocide a microbiocide; as dispersion stabilizer Carrageenan, Cellulose gum, diutan gum, gellan gum, whey protein concentrate, pectin, locust bean gum, xanthan gum or γ-polyglutamate, or a mixture of two or more thereof; and as dispersant an anionic, cationic and/or non-ionic detergent, especially salt modified phosphonic acid.

9. The use according to any one of claims 1 to 8, wherein the floor levelling compound has a bond strength greater or equal to 0.8 N/mm² measured according to EN 13892-8 after 3 days of drying in a climate chamber maintained at 20°C with 65% of relative humidity, preferably to 1.0 N/mm².

10. The use according to any one of claims 1 to 9, as levelling coating on a subfloor, comprising applying it in a thickness of up to 10 mm, e.g. up to 9, 8, 7, 6 or especially 5 mm.

11. The use according to any one of claims 1 to 9, as finishing coating for floors, wherein the levelling compound comprises coloring and/or shine contributing additives.

## Patentansprüche

1. Verwendung einer gebrauchsfertigen, pastösen oder flüssigen Nivelliermasse, mit der ein Unterboden als Basis für einen Bodenbelag auf seiner Oberseite beschichtet werden kann oder die dazu zusammengestellt/aufgebaut ist, wobei die Nivelliermasse eine Kombination aus einer wässrigen Polymerdispersion, einem Wasserglas, einen Füllstoff mit gasförmigen Einschlüssen, einer Spreitmasse und gegebenenfalls weiteren Zusatzstoffen umfasst, wobei die wässrige Polymerdispersion in einer Menge von 0,1 bis 30 Gewichtsprozent (Gew.-%), berechnet als trockenes Polymer, vorliegt; das Wasserglas in einer Menge von 1 bis 40 Gew.-% vorliegt; der Füllstoff mit gasförmigen Einschlüssen in einer Menge im Bereich von 0,5 bis 10 Gew.-% vorliegt; und die Spreitmasse in einer Menge im Bereich von 0,01 bis 5 Gew.-% vorliegt, als Nivelliermasse auf einem Unterboden oder als Endbeschichtung für Fußböden.

2. Verwendung nach Anspruch 1, wobei die wässrige Polymerdispersion eine wässrige Dispersion von mindestens einem Polymer, ausgewählt aus Homopolymeren, insbesondere Vinylestern, Polyestern, Polyepoxiden oder Polyamiden, und Copolymeren ist, die aus zwei oder mehreren Monomeren erhalten wurden, ausgewählt aus z. B. Vinylacetat, Vinylpropionat, Vinylbutyrat, Vinyl-2-ethylhexanoat, Vinyllaureat, 1-Methylvinylacetat, Vinylpivalat oder Vinylestern von alpha-verzweigten Monocarbonsäuren mit 9 bis 11 Kohlenstoffatomen; (Meth)acrylsäureestern oder -amiden wie Methylacrylat, Methylmethacrylat, Ethylacrylat, Ethylmethacrylat, Propylacrylat, Propylmethacrylat, Hydroxyethylacrylat, Hydroxyethylmethacrylat, Hydroxypropylacrylat, Hydroxypropylmethacrylat, n-Butylacrylat, n-Butylmethacrylat, t-Butylacrylat, t-Butylmethacrylat oder 2-Ethylhexylacrylat; Vinylaromaten, z. B. Styrol, Methylstyrol oder Vinyltoluol; Olefinen wie Ethylen, Propylen, 1,3-Butadien und Isopren; 1,3-Dienen; und Vinylhalogeniden, z. B. Vinylchlorid, weiteren (co)polymerisierbaren Monomeren, wie Fumarsäure, Maleinsäure oder deren Diethyl- oder Diisopropylester oder deren Anhydrid, ethylenisch ungesättigten Sulfonsäuren oder deren Salzen, wie Vinylsulfonsäure, 2-Acrylamido-2-methylpropansulfonsäure, Diallylphthalat, Divinyladipat, Diallylmaleat, Allylmethacrylat oder Triallylcyanurat, oder vernetzenden Comonomeren, wie Acrylamidoglykolsäure, Methylacrylamidoglykolsäuremethylester, N-Methylolacrylamid, N-Methylomethacrylamid, N-Methylsolallylcarbamat, Alkylethern wie Isobutoxyether oder Estern von N-Methylolacrylamid oder -methalcylamid, epoxyfunktionalisiert wie Glycidylmethacrylat oder -acrylat, siliciumfunktionellen Comonomeren wie Acryloxypropyltri(alkoxy)- oder-methacryloxypropyltri(alkoxy)silanen, wobei Alkoxy z. B. Methoxy, Ethoxy oder Ethoxyethylen- oder-propylenglykolether, Diacetonacrylamid und Acetylacetoxyethylacrylat oder-methacrylat ist; insbesondere einem Copolymerisat aus zwei oder mehr Monomeren ausgewählt aus der Gruppe bestehend aus Styrol, (Meth)acrylsäure, C₁-C₇-Alkyl(meth)acrylat, wie Methyl- oder Ethyl(meth)acrylat (bevorzugt) und (Meth)acrylamid.

3. Verwendung nach Anspruch 1 oder 2, wobei das Wasserglas ein wässriges Lithiumsilicat oder ein Gemisch aus Alkalisilicaten einschließlich Lithiumsilicat ist.

4. Verwendung nach einem der Ansprüche 1 bis 3, wobei der Füllstoff mit gasförmigen Einschlüssen und somit Poren und/oder Kapillaren ein Aluminosilicat ist.

5. Verwendung nach einem der Ansprüche 1 bis 4, wobei die Spreitmasse eine wässrige Suspension eines Polymers auf Polycarboxyletherbasis oder ein Gemisch aus zwei oder mehr solchen Polymeren ist.

6. Verwendung nach einem der Ansprüche 1 bis 5, wobei die wässrige Polymerdispersion in einer Menge von 0,5 bis 25 Gew.-%, in einer bevorzugten Variante von 1 bis 20 Gew.-%, berechnet als trockenes Polymer, vorliegt; das Wasserglas in einer Menge von 2 bis 20 Gew.-%, vorzugsweise von 3 bis 10 Gew.-% vorliegt; der Füllstoff mit gasförmigen Einschlüssen in einer Menge im Bereich von 1 bis 10 Gew.-%, vorzugsweise von 2 bis 10 Gew.-% vorliegt; und die Spreitmasse in einer Menge im Bereich von 0,05 bis 2 Gew.-%, vorzugsweise von 0,1 bis 1 Gew.-% vorliegt.

7. Verwendung nach Anspruch 6, wobei die optionalen anderen Zusatzstoffe ausgewählt sind aus Wasser, einem Entschäumer, einem Verdickungsmittel, einem Biozid, einem Dispersionsstabilisator, einem Dispergiermittel oder zwei oder mehr oder insbesondere allen davon; wobei das Wasser vorzugsweise in einer Menge von 1 bis 50 Gew.-% vorliegt; der Entschäumer in einer Menge vorliegt, die im Bereich von 0,05 bis 5 Gew.-% liegt; das Verdickungsmittel in einer Menge vorliegt, die im Bereich von 0,005 bis 1 Gew.-% liegt, das Biozid in einer Menge vorliegt, die im Bereich von 0,01 bis 2 Gew.-% liegt, der Dispersionsstabilisator in einer Menge vorliegt, die im Bereich von 0,05 bis 5 Gew.-% liegt, und das Dispergiermittel in einer Menge vorliegt, die im Bereich von 0,01 bis 5 Gew.-% liegt; und gegebenenfalls einem oder mehreren weiteren Bestandteilen, ausgewählt aus Fasern, Beschleunigern, Verzögerungsmitteln, Netzmitteln, Lösungsmitteln außer Wasser, Färbemitteln, Weichmachern, Licht- oder UV-Stabilisatoren oder Gemischen aus zwei oder mehreren davon, die in einer Gesamtmenge von 0,01 bis 20 Gew.-% vorliegen können.

8. Verwendung nach einem der Ansprüche 1 bis 7, umfassend als Entschäumer einen Entschäumer auf der Basis einer wässrigen Emulsion eines Polysiloxancopolymers mit hydrophobem Siliciumdioxid; als Verdickungsmittel eine modifizierte Cellulose; als Biozid ein Mikrobiozid; als Dispersionsstabilisator Carrageen, Cellulosegummi, Diutangummi, Gellangummi, Molkenproteinkonzentrat, Pektin, Johannisbrotgummi, Xanthangummi oder γ-Polyglutamat oder ein Gemisch aus zwei oder mehreren davon; und als Dispergiermittel ein anionisches, kationisches und/oder nichtionisches Detergens, insbesondere salzmodifizierte Phosphonsäure.

9. Verwendung nach einem der Ansprüche 1 bis 8, wobei die Bodennivelliermasse nach 3 Tagen Trocknen in einer Klimakammer, die bei 20 °C und 65 % relativer Feuchte gehaltenen wird, eine gemäß EN 13892-8 gemessene Haftfestigkeit von mehr als oder gleich 0,8 N/mm², vorzugsweise bis 1,0 N/mm², aufweist.

10. Verwendung nach einem der Ansprüche 1 bis 9 als Nivellierbeschichtung auf einem Unterboden, umfassend ihr Aufbringen in einer Dicke von bis zu 10 mm, z. B. bis zu 9, 8, 7, 6 oder insbesondere 5 mm.

11. Verwendung nach einem der Ansprüche 1 bis 9 als Endbeschichtung für Fußböden, wobei die Nivelliermasse Farbe und/oder Glanz beitragende Zusatzstoffe umfasst.

## Revendications

1. Utilisation d'une composition de nivellement prête à l'emploi, pâteuse ou liquide, qui permet ou est construite/mise en place pour recouvrir un sous-plancher en tant que base d'un revêtement de sol sur sa surface supérieure, ladite composition de nivellement de sol comprenant une combinaison d'une dispersion aqueuse de polymère, de verre soluble, d'une charge à inclusions gazeuses, d'une composition d'étalement et éventuellement d'autres additifs, la dispersion aqueuse de polymère étant présente en une quantité de 0,1 à 30 % en poids (% en poids), calculée en tant que polymère sec ; le verre soluble étant présent en une quantité de 1 à 40 % en poids ; la charge à inclusions gazeuses étant présente en une quantité allant de 0,5 à 10 % en poids ; et la composition d'étalement étant présente en une quantité allant de 0,01 à 5 % en poids, en tant que revêtement de nivellement sur un sous-plancher ou en tant que revêtement de finition pour sols.

2. Utilisation selon la revendication 1, dans laquelle la dispersion aqueuse de polymère est une dispersion aqueuse d'au moins un polymère choisi parmi les homopolymères, en particulier esters vinyliques, polyesters, polyépoxydes ou polyamides, et copolymères obtenus à partir de deux monomères ou plus choisis dans le groupe constitué par exemple, d'acétate de vinyle, propionate de vinyle, butyrate de vinyle, hexanoate de vinyl-2-éthyle, laurate de vinyle, acétate de 1-méthylvinyle, pivalate de vinyle ou esters vinyliques d'acides monocarboniques alpha-ramifiés de 9 à 11 atomes de carbone ; esters ou amides d'acide (méth)acrylique, par exemple acrylate de méthyle, méthacrylate de méthyle, acrylate d'éthyle, méthacrylate d'éthyle, acrylate de propyle, méthacrylate de propyle, acrylate d'hydroxyéthyle, méthacrylate d'hydroxyéthyle, acrylate d'hydroxypropyle, méthacrylate d'hydroxypropyle, acrylate de n-butyle, méthacrylate de n-butyle, acrylate de t-butyle, méthacrylate de t-butyle ou acrylate de 2-éthylhexyle ; composés vinyliques aromatiques, par exemple styrène, méthylstyrène ou vinyltoluène ; oléfines, par exemple éthylène, propylène, 1,3-butadiène et isoprène ; 1,3-diènes ; et halogénures de vinyle, par exemple chlorure de vinyle, d'autres monomères (co)polymérisables, par exemple acide fumarique, acide maléique ou son ester diéthylique ou diisopropylique ou son anhydride, acides sulfoniques éthyléniquement insaturés ou leurs sels, par exemple acide vinylsulfonique, acide 2-acrylamido-2-méthyl-propane sulfonique, phtalate de diallyle, adipate de divinyle, maléate de diallyle, méthacrylate d'allyle ou cyanurate de triallyle, ou comonomères de réticulation, par exemple acide acrylamidoglycolique, ester méthylique d'acide méthylacrylamidoglycolique, N-méthylolacrylamide, N-méthylolméthacrylamide, N-méthylsolallylcarbamate, alkyl éthers par exemple isobutoxyéther ou ester de N-méthylolacrylamide ou méthacylamide, fonctionnalisés époxy par exemple méthacrylate ou acrylate de glycidyle, comonomères fonctionnels du silicium, par exemple acryloxypropyltri(alcoxy)- ou méthacryloxypropyltri(alcoxy) silanes, où l'alcoxy est par exemple un méthoxy, éthoxy ou éthoxyéthylène- ou des propylèneglycoléthers, diacétone acrylamide et acétylacétoxyéthylacrylate ou méthacrylate ; en particulier un copolymérisat de deux monomères ou plus choisis dans le groupe constitué par le styrène, l'acide (méth)acrylique, le (méth)acrylate d'alkyle en C₁ à C₇, par exemple (méth)acrylate de méthyle ou d'éthyle (de préférence) et (méth)acrylamide.

3. Utilisation selon la revendication 1 ou la revendication 2, dans laquelle le verre soluble est un silicate de lithium aqueux ou un mélange de silicates alcalins comprenant du silicate de lithium.

4. Utilisation selon l'une quelconque des revendications 1 à 3, dans laquelle la charge à inclusions gazeuses, et donc les pores et/ou les capillaires, sont un aluminosilicate.

5. Utilisation selon l'une quelconque des revendications 1 à 4, dans laquelle la composition d'étalement est une suspension aqueuse d'un polymère à base de polycarboxyléthers, ou d'un mélange ou de deux ou plusieurs de ces polymères.

6. Utilisation selon l'une quelconque des revendications 1 à 5, dans laquelle la dispersion aqueuse de polymère est présente en une quantité de 0,5 à 25 % en poids, dans de préférence de 1 à 20 % en poids, calculée en tant sur polymère sec ; le verre soluble est présent en une quantité de 2 à 20 % en poids, de préférence de 3 à 10 % en poids ; la charge à inclusions gazeuses est présente en une quantité allant de 1 à 10 % en poids, de préférence de 2 à 10 % en poids ; et la composition d'étalement est présente en une quantité allant de 0,05 à 2 % en poids, de préférence de 0,1 à 1 % en poids.

7. Utilisation selon la revendication 6, dans laquelle les autres additifs éventuels sont choisis parmi l'eau, un agent anti-mousse, un agent épaississant, un biocide, un stabilisant de dispersion, un agent dispersant, ou deux ou plus ou chacun d'eux ; dans laquelle de préférence l'eau est présente en une quantité de 1 à 50 % en poids ; l'agent anti-mousse est présent en une quantité comprise dans entre 0,05 et 5 % en poids ; l'épaississant est présent en une quantité comprise entre 0,005 et 1 % en poids, le biocide est présent en une quantité comprise entre 0,01 et 2 % en poids, le stabilisant de dispersion est présent en une quantité comprise entre 0,05 et 5 % en poids, et l'agent dispersant est présent en une quantité comprise entre 0,01 et 5 % en poids ; et éventuellement un ou plusieurs autres ingrédients choisis parmi les fibres, les accélérateurs, les retardateurs, les agents mouillants, les solvants autres que l'eau, les agents colorants, les plastifiants, les stabilisants à la lumière ou UV ou les mélanges de deux ou plus de ceux-ci, pouvant être présents en une quantité totale comprise entre 0,01 et 20 % en poids.

8. Utilisation selon l'une quelconque des revendications 1 à 7, comprenant, comme agent anti-mousse, un agent anti-mousse à base d'une émulsion aqueuse d'un copolymère de polysiloxane avec de la silice hydrophobe ; comme épaississant, une cellulose modifiée ; comme biocide, un microbiocide ; comme stabilisant de dispersion, de la carraghénane, gomme de cellulose, gomme de diutane, gomme de gellane, concentré de protéine de lactosérum, pectine, gomme de caroube, gomme de xanthane ou γ-polyglutamate, ou un mélange de deux ou plus de ceux-ci ; et comme agent dispersant, un détergent anionique, cationique et/ou non-ionique, en particulier l'acide phosphonique modifié par un sel.

9. Utilisation selon l'une quelconque des revendications 1 à 8, dans laquelle la composition de nivellement du sol a une force de liaison supérieure ou égale à 0,8 N/mm² mesurée selon la norme EN 13892-8 après 3 jours de séchage dans une chambre climatique maintenue à 20 °C avec 65 % d'humidité relative, de préférence à 1,0 N/mm².

10. Utilisation selon l'une quelconque des revendications 1 à 9, en tant que revêtement de nivellement sur un sous-plancher, comprenant son application dans une épaisseur allant jusqu'à 10 mm, par exemple jusqu'à 9, 8, 7, 6 ou en particulier 5 mm.

11. Utilisation selon l'une quelconque des revendications 1 à 9, en tant que revêtement de finition pour sols, dans laquelle la composition de nivellement comprend des additifs colorants et/ou de brillance.
